# EUROPEAN PATENT SPECIFICATION

(11) **EP 0 948 885 B1**
(45) Date of publication and mention of the grant of the patent: **19.03.2003**
(21) Application number: 99202255.8
(22) Date of filing: 28.05.1996
(51) Int. Cl.: A01F 15/07, B65G 45/20

(54) **A harvesting machine**
Erntemaschine
Récolteuse

(30) Priority: 02.06.1995 NL 1000487
(43) Date of publication of application: 13.10.1999
(62) Divisional of application: 96201479.1
(73) Proprietor: Greenland Geldrop B.V., NL-5667 KP Geldrop (NL)
(72) Inventor: van den Wildenberg, Leonardus Johannes, 6021 CT Budel (NL)
(74) Representative: Vollebregt, Cornelis Jacobus, Ir.

(56) References cited:
- EP-A- 0 150 631
- EP-A- 0 201 898
- EP-A- 0 510 499
- FR-A- 2 575 362

## Description

The invention relates to a harvesting machine according the pre-characterizing part of the claim 1 and as known from EP-A-0 510 499.

Harvesting machines of this kind for forming bales are generally known, for example from European patents Nos. 0 152 085, 0 201 897, 0 210 898 and 0 210 899 and from DE-OS-3 631 159. Generally two types of harvesting machines of this kind can be distinguished thereby, namely a first type, wherein a plurality of belts arranged in side-by-side relationship are utilized for baling the crop, which belts are passed over a plurality of guide rollers, in such a manner that said belts bound the space in which the crop is rolled into a cylindrical bale, and a type wherein the space in which the bale is formed is bounded by a large number of closely spaced parallel guide rollers for the crop, which guide rollers all make direct contac with the crop.

There is a danger that the crop will wrap itself round a guide roller, for example near the point where the pick-up means introduce the crop into the space in which the crop is to be rolled into a cylindrical bale. Solutions for said problem have been proposed. In the structure according EP-A-0 510 499 there is used a roller co-operating with said guide roller and at its circumference provided with a protruding blade helically extending around said roller over several windings of 360°. In an other solution a fixedly disposed plate-shaped or strip-shaped scraper is provided near such a guide roller, by means of which scraper any crop adhering to the guide roller in question must be scraped off the respective guide roller. This material will accumulate near the scraper and consequently special measures have to be taken to make it possible to discharge said material accumulating near said scraper, for example providing a screw conveyor disposed near said scraper for discharging the material scraped off the guide roller by said scraper. This leads to complicated constructions, which not only involve additional cost but which also disadvantageously increase the weight of the harvesting machine and make it necessary to make several precise adjustments and/or readjustments.

According to the invention several projecting members are disposed in spaced-apart relationship, seen in the longitudinal direction of a roller.

This makes it possible to subject the crop to a drawing, tearing, cutting and/or a compacting action by means of said projecting members, as a result of which the crop will be prevented from wrapping itself round the guide roller and also round the roller co-operating with said guide roller.

The invention will be explained in more detail hereafter with reference to a number of possible embodiments of the construction according to the invention diagrammatically illustrated in the accompanying figures.
Figure 1 is a diagrammatic side view of a harvesting machine according to the invention.
Figures 2 and 3 are diagrammatic perspective views of different embodiments of a guide roller and a roller according to the invention which co-operates therewith.

It is noted that like parts are renumbered alike in the various figures.

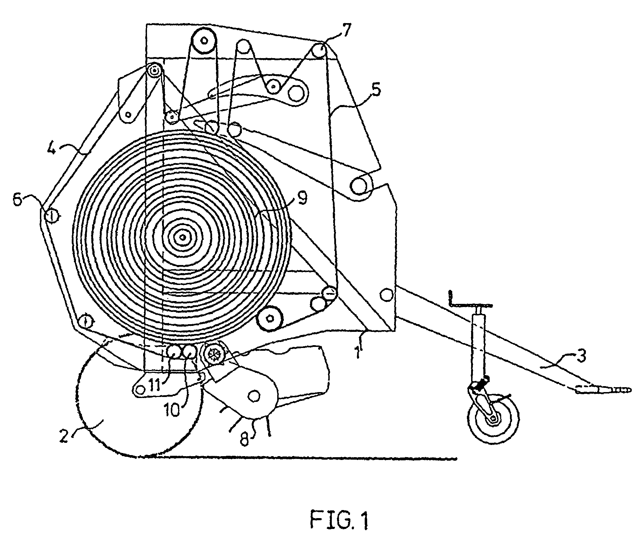

As is schematically shown in figure 1, a harvesting machine comprises a frame 1, which is supported by ground wheels 2 and which is in the illustrated embodiment provided with a draw arm 3, by means of which the harvesting machine can be hitched to a tractor or similar vehicle. It will also be conceivable, however, for the harvesting machine to be a self-propelled harvesting machine or a mounted harvesting machine.

Two groups of belts 4 and 5 respectively arranged in side-by-side relationship are provided in the frame, whereby belts 4 are passed over guide rollers 6 and belts 5 are passed over a number of guide rollers 7. The harvesting machine is furthermore provided with a pick-up mechanism 8, by means of which crop lying on the ground can be picked up during operation and be supplied to the space bounded by the facing parts of belts 4 and 5, between which the crop can be rolled into a cylindrical bale 9.

The construction of such a harvesting machine as well as the operation thereof are known, both from practice and from a large number of publications such as the aforesaid European patents, so that it will not be necessary to give a detailled description of the construction and operation of such a harvesting machine herein.

Furthermore harvesting machines of this type are known wherein no belts are used, but wherein the space in which the crop is to be rolled into a cylindrical bale is bounded by a plurality of spaced-apart guide rollers with which the crop comes into direct contact.

In practice it has become apparent that there is a risk of the crop wrapping itself round a respective guide roller 10, for example at the location of the guide roller 10 that is disposed near the place where pick-up mechanism 8 supplied the crop to the space where the cyclindrical bale 9 is to be formed.

In order to prevent this a further roller 11 extending parallel to guide roller 10 and directly co-operating therewith is according to the invention provided near guide roller 10.

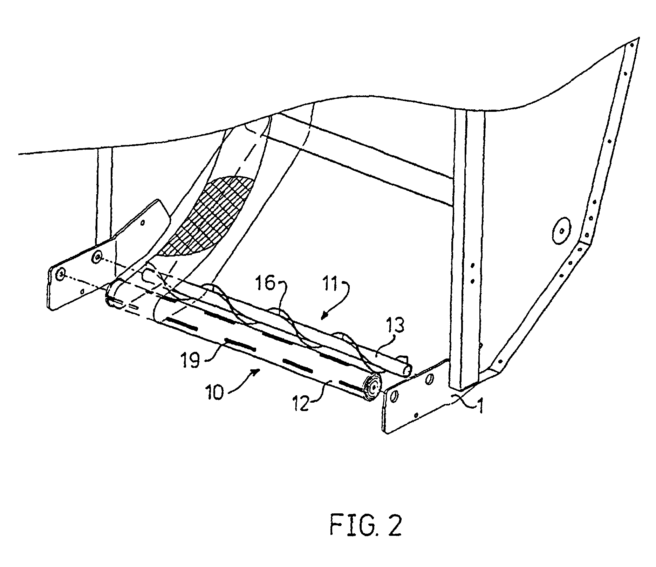

A first embodiment of the co-operating rollers 10 and 11 is shown in figure 2. As will be apparent from figure 2, roller 10, which is capable of rotation about its central axis during operation, comprises a cylindrical body 12, whilst roller 11, which is likewise capable of rotation during operation, comprises a cylindrical body 13.

The two co-operating rollers 10 en 11 can be rotated in the same direction or in opposite directions by suitable transmission means, such as ropes, chains or gears. Preferably said drive takes place by means of (a) belt(s) 4.

The roller 11 has been provided with a helical means 16 and the guide roller 10 has been provided with a plurality of aligned short projecting members or ribs 19. Preferably two successive (seen in circumferential direction) strip-shaped means 19 are also staggered relative to each other in the longitudinal direction of the respective roller 10, as will be apparent from figure 2.

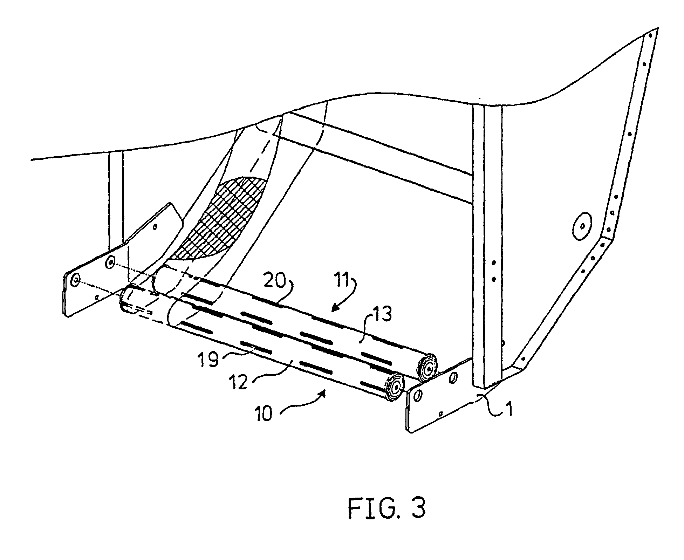

Figure 3 shows yet another embodiment, wherein the guide roller 10 as well as the roller 11 co-operating therewith are provided with spaced-apart projecting members or ribs 19 and 20 respectively extending in the longitudinal direction of the respective roller, whereby several such rows of aligned strip-shaped members or ribs 19 and 20 respectively are distributed over the circumference of the respective roller.

Crop attempting to wrap itself round either one of the two rollers will be grasped as a result of the co-operation between the projecting members of the one roller and the surface of the other roller and/or the mutual co-operation of the projecting members of the two rollers, and be shortened as a result of a tearing action to which it is subjected, so that the crop is prevented from wrapping itself round either one of the co-operating rollers, or both, as a result of the reduced length of the crop stems, whilst furthermore the crop will be kept in motion by the projecting members and be flung off the rollers, whereby the shortened crop stems may be discharged, for example between the belts, after being pressed together partly or entirely.

Projecting members or ribs 19 and 20 may be made of a rather hard material, so that said members will carry out some form of cutting operation with respect to the crop, or of a more flexible material, whereby, in particular when the two co-operating rollers 10 and 11 are pressed together with some bias, an intimate contact can be effected between the projecting members and the circumferential surfaces of the cylindrical bodies in order to clamp down the crop parts locally and thus contribute towards the tearing to short pieces of the crop parts.

As already said before, the two co-operating rollers 10 and 11 may be rotated in the same direction or in opposite directions. In particular when flexible projecting members or ribs are used, the two co-operating rollers may be driven in such a manner that said rollers do not have the same circumferential velocity if said projecting members or ribs can move "across one another". Another possibility is thereby to have the roller 11 that co-operates with guide roller 10 make a reciprocating movement.

## Claims

1. A harvesting machine intended for rolling crop into a cylindrical bale, said harvesting machine being provided with a frame (1), with pick-up means (8) for picking up crop lying on the ground and with means (4, 5) for rolling the picked-up crop into a bale with a guide roller (10) extending substantially parallel to the central axis of the bale to be formed, which guide roller (10) forms part of said means for rolling the picked-up crop into a bale and with
a roller (11) co-operating with said guide roller (10), whereby at least one of the co-operating rollers (10, 11) is circumferentially provided with an outwardly projecting member (19, 20), which member (19, 20) is at least substantially in contact with the outer circumference of the other roller, **characterized in that** several projecting members (19, 20) are disposed in spaced-apart relationship, seen in the longitudinal direction of a roller (10).

2. A harvesting macine according to claim 1, **characterized in that** both rollers (10, 11) are fitted with several projecting members (19, 20) disposed in spaced-apart relationship seen in the longitudinal direction of the rollers (10, 11).

3. A harvesting machine according to claim 1 or 2, **characterized in that** a projecting member (19, 20) is made of a resilient material.

4. A harvesting machine according to any one of the preceding claims, **characterized in that** the projecting members (19, 20) extend parallel to the axis of rotation of the roller (10, 11).

5. A harvesting machine according to any one of the preceding claims, **characterized in that** the two rollers (10, 11) are pressed together with some bias.

6. A harvesting machines according to any one of the preceding claims, **characterized in that** a projecting member (19, 20) is corrugated.

## Patentansprüche

1. Erntemaschine zum Aufrollen der Ernte zu einem zylindrischen Ballen, wobei die Erntemaschine aufweist: einen Rahmen (1), eine Aufnehmereinrichtung (8) zum Aufnehmen der auf dem Erdboden liegenden Ernte und eine Einrichtung (4, 5) zum Aufrollen der aufgenommenen Ernte zu einem Ballen mit einer Führungswalze (10), die sich im wesentlichen parallel zur Mittelachse des herzustellenden Ballens erstreckt, wobei diese Führungswalze (10) einen Teil der Einrichtung zum Aufrollen der aufgenommenen Ernte zu einem Ballen bildet, und
eine Walze (11), die mit der Führungswalze (10) zusammenwirkt, wodurch wenigstens eine der zusammenwirkenden Walzen (10, 11) am Umfang ein nach außen hervorstehendes Element (19, 20) aufweist, wobei das Element (19, 20) zumindest weitgehend mit dem Außenumfang der anderen Walze in Kontakt ist, **dadurch gekennzeichnet, dass** mehrere hervorstehende Elemente (19, 20) in Längsrichtung einer Walze (10) zueinander beabstandet angeordnet sind.

2. Erntemaschine nach Anspruch 1, **dadurch gekennzeichnet, dass** an den beiden Walzen (10, 11) mehrere hervorstehende Elemente (19, 20) montiert sind, die in Längsrichtung der Walzen (10, 11) zueinander beabstandet angeordnet sind.

3. Erntemaschine nach Anspruch 1 oder 2, **dadurch gekennzeichnet, dass** ein hervorstehendes Element (19, 20) aus einem elastischen Material besteht.

4. Erntemaschine nach einem der vorangehenden Ansprüche, **dadurch gekennzeichnet, dass** die hervorstehenden Elemente (19, 20) parallel zur Rotationsachse der Walze (10, 11) verlaufen.

5. Erntemaschine nach einem der vorangehenden Ansprüche, **dadurch gekennzeichnet, dass** die beiden Walzen (10, 11) unter Spannung zusammengepresst werden.

6. Erntemaschine nach einem der vorangehenden Ansprüche, **dadurch gekennzeichnet, dass** ein hervorstehendes Element (19, 20) wellig ist.

## Revendications

1. Machine de récolte destinée à enrouler des matières de récolte sous forme d'une balle cylindrique, la machine de récolte ayant un châssis (1) muni d'un dispositif (8) de ramassage des matières de récolte placées sur le sol et d'un dispositif (4, 5) destiné à enrouler les matières de récolte ramassées sous forme d'une balle avec un rouleau de guidage (10) qui s'étend pratiquement en direction parallèle à l'axe central de la balle à former, le rouleau de guidage (10) faisant partie du dispositif destiné à enrouler les matières de récolte ramassées sous forme d'une balle, et avec
un rouleau (11) qui coopère avec le rouleau de guidage (10), si bien que l'un au moins des rouleaux coopérants (10, 11) est muni circonférentiellement d'un organe (19, 20) en saillie vers l'extérieur, cet organe (19, 20) étant au moins pratiquement au contact de la circonférence externe de l'autre rouleau, **caractérisée en ce que** plusieurs organes en saillie (19, 20) sont disposés sous forme distante, lorsqu'ils sont vus dans la direction longitudinale d'un rouleau (10).

2. Machine de récolte selon la revendication 1, **caractérisée en ce que** les deux rouleaux (10, 11) sont munis de plusieurs organes en saillie (19, 20) espacés dans la direction longitudinale des rouleaux (10, 11).

3. Machine de récolte selon la revendication 1 ou 2, **caractérisée en ce qu'**un organe en saillie (19, 20) est formé d'un matériau élastique.

4. Machine de récolte selon l'une quelconque des revendications précédentes, **caractérisée en ce que** les organes en saillie (19, 20) s'étendent parallèlement à l'axe de rotation du rouleau (10, 11).

5. Machine de récolte selon l'une quelconque des revendications précédentes, **caractérisée en ce que** les deux rouleaux (10, 11) sont comprimés avec une certaine force de rappel.

6. Machine de récolte selon l'une quelconque des revendications précédentes, **caractérisée en ce qu'**un organe en saillie (19, 20) est ondulé.
